# EUROPÄISCHE PATENTSCHRIFT

(11) **EP 2 072 305 B1**
(45) Veröffentlichungstag und Bekanntmachung des Hinweises auf die Patenterteilung: **25.04.2012**
(21) Anmeldenummer: 08022061.9
(22) Anmeldetag: 18.12.2008
(51) Int. Cl.: B60J 7/12

(54) **Softtopverdeckbezug mit Stylingkante**
Soft top cloth with styling edge
Revêtement de capote doté d'un rebord stylisé

(30) Priorität: 21.12.2007 DE 102007062093
(43) Veröffentlichungstag der Anmeldung: 24.06.2009
(73) Patentinhaber: Webasto AG, 82131 Stockdorf (DE)
(72) Erfinder: Respondek, Michael, 81249 München (DE); Bruggaier, Ulrike, 82041 Oberhaching (DE)
(74) Vertreter: Bosch, Matthias

(56) Entgegenhaltungen:
- DE-B- 1 192 529
- US-A- 6 022 064
- US-A1- 2005 280 292

## Beschreibung

Gegenstand der vorliegenden Erfindung ist ein Verdeckstoff für ein Softtop eines Fahrzeuges, der über zumindest ein Festelement spannbar ausgebildet ist. Ferner richtet sich die Erfindung auf ein Softtop mit Verdeckbezug und Stylingkante.

Aus dem Stand der Technik ist es bekannt, dass Softtopverdeckbezüge in jeder Richtung eine kontinuierliche Fläche darstellen, d.h., dass die zu überspannenden Dachflächen herkömmlicherweise aus einzelnen Bezugbahnen bestehen, die über Längs- oder Quernähte miteinander verbunden sind und die sphärenartige Dachfläche eines Fahrzeugs ausbilden.

Aufgrund der kontinuierlichen Fläche eines Daches ist es daher herkömmlicherweise nicht möglich, technische Funktionskanten und -rinnen aus dem Verdeckbezugsmaterial herzustellen. Derartige Funktionselemente müssen beispielsweise aus Blech- oder Kunststoffkonstruktionen hergestellt werden, die an der kontinuierlichen Dachfläche angebracht werden.

Insbesondere die zur Vermeidung von Wassereintritt in das Fahrzeuginnere notwendigen Kanten und Rinnen zur Abfuhr von Regen- und Tauwasser stellen seit Verwendung von Softtopverdeckbezügen erhebliche Probleme dar. Denn zur Vermeidung von Wassereintritt, verursacht durch Tauwasser oder Regenwasser bei einem nicht in Bewegung befindlichen Fahrzeug sind Funktionsrinnen und Kanten notwendig, um stehendes Wasser auf den Stoßflächen zwischen Softtop und Karosserie sowie den Nahtbereichen zu vermeiden. Gleichermaßen ist es erforderlich, Wassereintritt in das Fahrzeuginnere bei einem in Bewegung befindlichen Fahrzeug zu verhindern. Bei einem mit Softtopverdeckbezügen ausgestatteten Fahrzeug kommt insbesondere bei Hochgeschwindigkeitsfahrten der Balooningeffekt nachteilig zum Tragen, sodass gerade für den Anwendungsfall bei Hochgeschwindigkeitsfahrten der Wassereintritt an den kritischen Stoßflächen zwischen Softtopverdeckbezug und Karosserie vermieden werden muß.

Die Druckschrift DE 1 192 529 beschreibt eine Einrichtung zur Befestigung eines Verdeckbezuges bei Cabriolet-Fahrzeugen, wobei der Verdeckbezug mittels eines an der Rückwand der Karosserie entlang geführten Spanndrahtes oder sonstigen Spanngliedes an einer am oberen Rand der Karosserie angeordneten Befestigungsrinne befestigt wird. Die Befestigungsrinne ist im Querschnitt als flaches Rechteck mit etwa in der Neigung des hinteren Verdeckteiles liegenden langen Seiten und mit einem in der unteren Hälfte der äußeren langen Seite angeordneten Schlitz ausgebildet. Der mit einem Befestigungswulst versehene untere Rand des Verdeckbezuges ist durch das von außen auf ihn aufgelegte Spannglied durch den Schlitz hindurch in die Befestigungsrinne in Form einer Schleife so hineingezogen, dass der Befestigungswulst unter Einspannung des Verdeckbezuges fest auf den Längsrändern des Schlitzes von außen aufliegt.

Aufgrund der oben aufgeführten Nachteile, die herkömmlicherweise mit Kunststoff- oder Blechkonstruktionen gelöst werden, hat es sich als nachteilig erwiesen, dass aufgrund der technischen Gegebenheiten nur sehr geringe Gestaltungsfreiheiten für ästhetische Formgebungen bei Softtopverdeckbezügen verbleiben.

Aufgrund der zunehmenden Bedeutung ästhetischer Formgebung im Automobilbereich ist es daher Aufgabe der vorliegenden Erfindung, einen Verdeckstoff für ein Softtop bereitzustellen, mit dem es möglich ist, sowohl technische Funktionskanten und -rinnen vorzusehen, als auch den ästhetischen Gestaltungsfreiraum zu erweitern.

Diese Aufgabe wird durch den erfindungsgemäßen Verdeckstoff für ein Softtop mit den Merkmalen gemäß Anspruch 1 sowie durch ein Softtop für ein Fahrzeug, bestehend aus einem Verdeckstoff nach Anspruch 10 und 11 gelöst.

Vorteilhafte Weiterbildungen der vorliegenden Erfindung sind in den Unteransprüchen gekennzeichnet.

Bei dem erfindungsgemäßen Verdeckstoff für ein Softtop ist der Verdeckstoff über zumindest ein Festelement spannbar ausgebildet, wobei das Festelement zumindest eine Abkröpfung oder Einbuchtung aufweist, und der das Festelement überspannende Verdeckstoff durch geeignete Spannmittel so verformt wird, dass der Verdeckstoff im Bereich der Abkröpfung oder Einbuchtung im Wesentlichen der Kontur der Abkröpfung oder Einbuchtung nachfolgt, wobei das Festelement als Spriegel, Dachspitze, Dichtungsträger oder Kinematikelement ausgebildet ist.

Vorteilhafterweise ist das Spannmittel flexibel und forminstabil ausgebildet. Bei einem bevorzugten Ausführungsform der vorliegenden Erfindung ist das Spannmittel ein Seil, welches ein Elastizitätsmodul aufweist, das einen lang anhaltenden und gleichbleibenden Spannungszustand aufbauen und aufrechterhalten kann. Zur Verwendung eines derartigen Spannmittels eignen sich Stahl- oder Kunststoffseile, wobei das elastische Verhalten sowohl über angeschlossene Federelemente oder dergleichen erbracht werden kann als auch in der technischen Eigenschaft des Spannmittels begründet liegen kann.

Vorteilhafterweise ist das Spannmittel so formflüssig mit dem erfindungsgemäßen Verdeckstoff verbunden, dass das Aufbringen einer Spannung in dem Spannmittel dazu führt, dass der Verdeckstoff verformt wird und versucht, sich stets dem Spannmittel anzuschmiegen.

Zweckmäßigerweise wird das Spannmittel in einer Tasche oder einer Hülle geführt, die an dem Verdeckstoff angeordnet, beispielsweise mit dem Verdeckstoff formschlüssig verbunden ist.

Bei einer bevorzugten Ausführungsform der vorliegenden Erfindung ruht das Spannmittel im Spannungszustand im Wesentlichen in der Sohle der Abkröpfung oder Einbuchtung des Festelements. Als Folge hiervon spannt sich auch der Verdeckstoff über dieses formgebende Festelement. Je nach Anordnung des Festelementes kann dies bei der vorliegenden Erfindung der Spriegel, die Dachspitze, ein Dichtungsträger, ein Kinematikelement oder ein anderes formgebendes Festelement sein, das zum Aufbau oder zur Stabilität des Softtops dient.

Vorteilhafterweise ist das Spannmittel so angeordnet, dass es im Spannungszustand den erfindungsgemäßen Verdeckstoff in die gewünschte Form zwingt und dort aufgrund des Spannungszustandes auch bei Hochgeschwindigkeitsfahrten hält. Bei der Auslegung des Elastizitätsmoduls des Spannmittels ist daher von Bedeutung, auch den sogenannten Balooningeffekt so mit in die Berechnung einfließen zu lassen, dass ein Spannungszustand des Spannmittels erreicht wird, der den Auftriebskräften, die den Balooningeffekt erzeugen, entgegenwirkt.

Bei einer bevorzugten Ausführungsform der vorliegenden Erfindung stoßen im Bereich der Abkröpfung oder Einbuchtung des Festelements mindestens zwei Teilbereiche des erfindungsgemäßen Verdeckstoffes aneinander. Die Fügestelle zwischen den mindestens zwei Teilbereichen des erfindungsgemäßen Verdeckstoffes kann über eine Naht hergestellt werden. Als Fügung eignet sich eine Schweißbahnverbindung, eine Nahtverbindung mit Garn, eine Klebeverbindung, eine Nietenverbindung oder eine Kombination der vorgenannten Fügetechniken.

Zweckmäßigerweise erfolgt die Krafteinleitung durch das Spannmittel im Bereich der Naht, die gemeinsam von den mindestens zwei Teilbereichen im Bereich der Abkröpfung oder Einbuchtung des Festelements ausgebildet wird. Hierzu ist es zweckmäßig, eine über die Naht erstreckende Tasche oder Hülle auszubilden, in der das Spannmittel lose geführt wird.

Erfindungsgemäß kann diese Tasche durchgehend über die gesamte Länge der gemeinsamen Naht verlaufen. Ebenso ist es erfindungsgemäß denkbar, das Spannmittel in einer Schlaufenkonstruktion zu führen, sodass nur an bestimmten, ausgewählten Stellen des Softtops eine Krafteinleitung erfolgt und somit bestimmte Konturen des Softtops mit Verdeckstoff herausgearbeitet und modelliert werden können.

Für die Anordnung und Ausgestaltung der Tasche oder Hülle zur Führung des Spannmittels ist es von Bedeutung, dass der jeweilige Krafteinleitungsbereich so gewählt wird, dass keine störenden ästhetischen Einflüsse, wie beispielsweise Raffungen, Faltungen, Nahtkonzentrationen entstehen.

Zur Befestigung der Tasche oder Hülle an einem Teilbereich oder an mehreren Teilbereichen des Verdeckstoffes kann Nahttechnik, Klebetechnik, Schweißtechnik, Niettechnik oder andere Fügetechniken verwendet werden. Ebenso ist eine Kombination der vorgenannten Fügetechniken möglich. Insbesondere die Verwendung von Nähten mit Garn kann bei der Berücksichtigung des ästhetischen Gesamteindrucks von Bedeutung sein.

Neben der Ausbildung einer sogenannten Stylingkante, die im Wesentlichen ästhetische Funktionen erfüllt ist die Anordnung und Ausführung einer technischen Funktionskante oder -rinne unter Verwendung der erfindungsgemäßen Verdeckstoffs so zu wählen, dass eine Wasserabfuhrfunktion ausgebildet wird. Zweckmäßigerweise kann die Funktionskante oder -rinne des Softtops an eine Funktionskante an der Karosserie anschließen.

Hierzu kann das zumindest eine Festelement im Wesentlichen parallel oder orthogonal zur Fahrzeuglängsachse verlaufen und somit Kanten und Rinnen ausgebildet werden, die im Wesentlichen parallel oder orthogonal zur Fahrzeuglängsachse verlaufen. Wie bereits dargestellt, ist die Anordnung von Funktionsrinnen für die sichere und zuverlässige Abfuhr von Wasser von Bedeutung für die vorliegende Erfindung.

Zwei bevorzugte Ausführungsformen der vorliegenden Erfindung werden anhand der nachfolgenden Figuren näher erläutert. Es zeigen:
- Fig. 1: eine perspektivische Systemdarstellung einer Ausführungsform des erfin- dungsgemäßen Verdeckstoffs bei einem Softtop mit einer parallel zur Fahr- zeuglängsachse verlaufenden Stylingkante;
- Fig. 2: eine perspektivische Systemdarstellung einer weiteren Ausführungsform des erfindungsgemäßen Verdeckstoffs bei einem Softtop mit einer orthogonal zur Fahrzeuglängsachse verlaufenden Stylingkante;
- Fig. 3: eine Schnittdarstellung A-A durch die Stylingkante gemäß Figur 1;
- Fig. 4: eine erste systematische Schnittdarstellung des Details A gemäß Fig. 3 ohne Spriegel;
- Fig. 5: eine zweite systematische Schnittdarstellung des Details A gemäß Fig. 3 mit Spriegel.

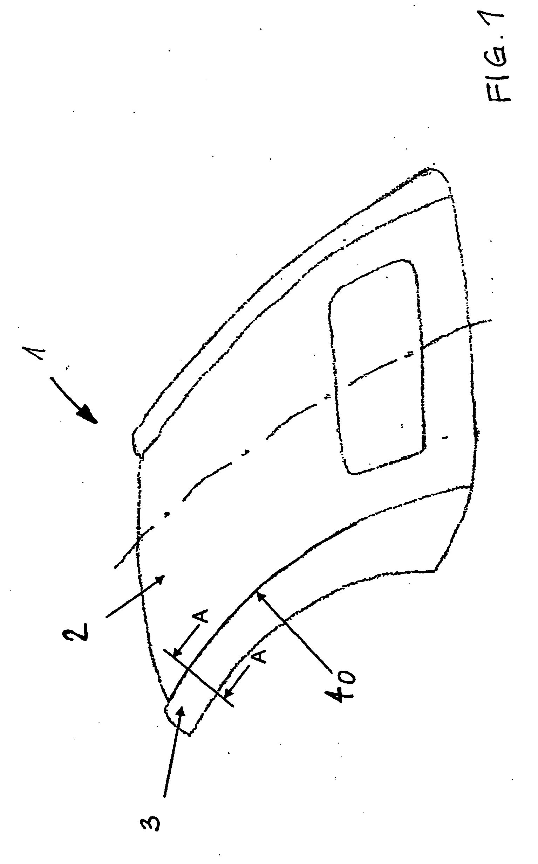

Bei der bevorzugten Ausführungsform der vorliegenden Erfindung gemäß Figur 1 ist ein Softtop 1 mit einer längs verlaufenden Stylingkante 40 gezeigt, die zwischen einem Verdeckstoff Seitenteil 3 und dem Verdeckstoff Mittelteil 2 angeordnet ist. Aus Symmetriegründen befindet sich auf beiden Seiten des Softtops ein längsverlaufende Stylingkante (nicht näher bezeichnet).

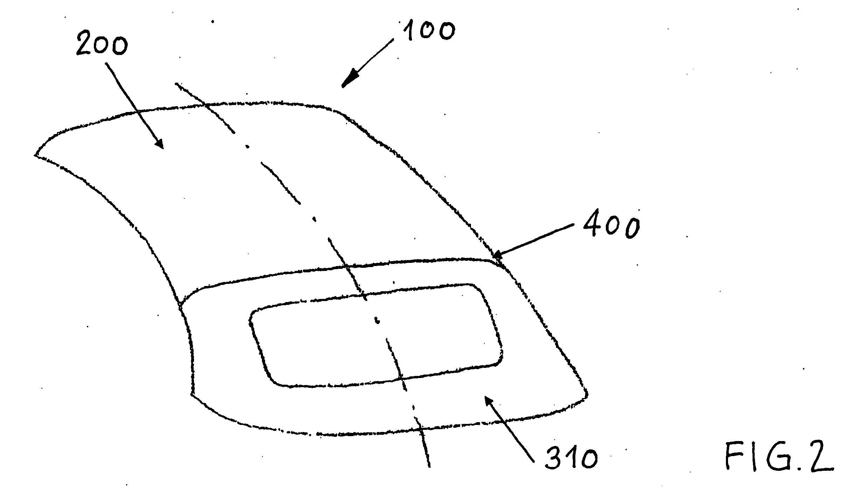

Bei der bevorzugten Ausführungsform der vorliegenden Erfindung gemäß Figur 2 ist ein Softtop 100 mit einer quer verlaufenden Stylingkante 400 gezeigt, die zwischen einem Verdeckstoff Seitenteil 310 und dem Verdeckstoff Mittelteil 200 angeordnet ist.

Bei einer weiteren bevorzugten Ausführungsform der vorliegenden Erfindung (nicht dargestellt) verläuft die Stylingkante in der Mitte des Verdeckstoff Mittelteils.

Bei einer weiteren bevorzugten Ausführungsform der vorliegenden Erfindung (nicht dargestellt) verlaufen mehrere längs und querverlaufende Stylingkanten über das Softtop. Ebenso ist es erfindungsgemäß, dass die Stylingkante nur einen Teilbereich des Softtops überdeckt (nicht dargestellt), so daß beispielsweise, der Bereich oberhalb der Türen, oder der Heckscheibe mit einer Stylingkante versehen ist.

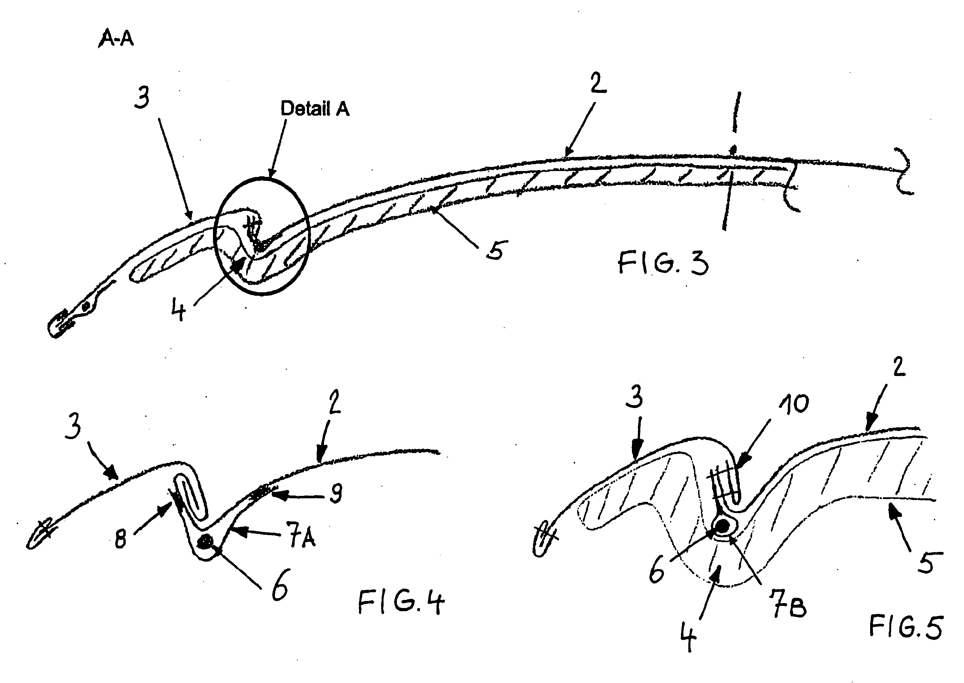

Figur 3 zeigt die Schnittdarstellung A-A durch die Stylingkante mit dem Verdeckstoff Seitenteil 3 und dem Verdeckstoff Mittelteil 2. Die Naht dieser beiden Teilbereiche ist im Detail A näher dargestellt. Die beiden Teilbereiche 2 und 3 sind über ein Festelement, hier Spriegel 5 gespannt, der eine Abkröpfung 4 ausbildet. Zur besseren Darstellung wurde zwischen dem Verdeckstoff Seitenteil 3 und dem Verdeckstoff Mittelteil 2 ein Zwischenraum vorgesehen, der jedoch tatsächlich nicht vorhanden ist. Der Verdeckstoff 2, 3 spannt sich lückenlos über das Festelement, hier Spriegel 5 und schmiegt sich an diesen an.

Gemäß Figur 4, bei der kein Festelement gezeigt wird, ist eine mögliche bevorzugte Ausführungsform für eine Tasche 7A zur Führung des Spannmittels 6 dargestellt. Bei dieser bevorzugten Ausführungsform wird die Tasche 7A durch eine kehlförmig ausgebildete Stoff- oder Textilbahn gebildet, die an ihren Seitenrändern 8 und 9 mit dem Verdeckstoff Mittelteil 2 verbunden ist. Bei dieser Ausführungsform erfolgt die Krafteinleitung über zwei Teilstrecken, nämlich über die Seitenränder 8 und 9. Ebenso ist es erfindungsgemäß denkbar, das die Tasche 7A auch an dem Verdeckstoff Seitenteil 3 befestigt ist (nicht dargestellt).

Gemäß Figur 5 erfolgt die Führung des Spannmittels 6 in einer Tasche 7B, die als Hülle ausgebildet ist und in der Abkröpfung 4 des Spriegels 5 ruht. Das Verdeckstoff Seitenteil 3 und das Verdeckstoff Mittelteil 2 bilden eine gemeinsame Naht 10, die auch die Befestigung der Tasche 7B einschließt. Auf diese Weise, wird die Kraft nur über eine Strecke, nämlich über die Naht 10 in den Verdeckstoff eingeleitet.

## Patentansprüche

1. Verdeckstoff (2, 3; 200, 310) für ein Softtop (1; 100), der über zumindest ein Festelement (5) spannbar ausgebildet ist, wobei das Festelement (5) zumindest eine Abkröpfung (4) oder Einbuchtung aufweist und der das Festelement (5) überspannende Verdeckstoff (2, 3; 200, 310) durch geeignete Spannmittel (6) so verformt wird, dass der Verdeckstoff (2, 3; 200, 310) im Bereich der Abkröpfung (4) oder Einbuchtung im wesentlichen der Kontur der Abkröpfung (4) oder Einbuchtung nachfolgt, **dadurch gekennzeichnet, dass** das Festelement (5) als Spriegel, Dachspitze, Dichtungsträger oder Kinematikelement ausgebildet ist.

2. Verdeckstoff (2, 3; 200, 310) nach Anspruch 1, **dadurch gekennzeichnet, dass** das Spannmittel (6) flexibel und forminstabil ausgebildet ist.

3. Verdeckstoff (2, 3; 200, 310) nach Anspruch 1 oder 2, **dadurch gekennzeichnet, dass** das Spannmittel (6) formschlüssig mit dem Verdeckstoff (2, 3; 200, 310) verbunden ist.

4. Verdeckstoff (2, 3; 200, 310) nach einem der vorherigen Ansprüche, **dadurch gekennzeichnet, dass** das Spannmittel (6) lose in einer Tasche (7A; 7B) geführt wird, die an dem Verdeckstoff (2, 3; 200, 310) angeordnet ist.

5. Verdeckstoff (2, 3; 200, 310) nach einem der vorherigen Ansprüche, **dadurch gekennzeichnet, dass** das Spannmittel (6) im Spannungszustand im wesentlichen in der Sohle der Abkröpfung (4) oder Einbuchtung ruht.

6. Verdeckstoff (2, 3; 200, 310) nach einem der vorherigen Ansprüche, **dadurch gekennzeichnet, dass** im Bereich der Abkröpfung (4) oder Einbuchtung mindestens zwei Teilbereiche des Verdeckstoffes aneinandergefügt sind.

7. Verdeckstoff (2, 3; 200, 310) nach Anspruch 6, **dadurch gekennzeichnet, dass** die mindestens zwei Teilbereiche im Bereich der Abkröpfung (4) oder Einbuchtung eine gemeinsame Naht (10) ausbilden.

8. Verdeckstoff (2, 3; 200, 310) nach Anspruch 7, **dadurch gekennzeichnet, dass** die gemeinsame Naht (10) so ausgebildet ist, dass die Krafteinleitung durch dass Spannmittel (6) über sie erfolgt.

9. Verdeckstoff (2, 3; 200, 310) nach Anspruch 8 oder Anspruch 4, **dadurch gekennzeichnet, dass** die Tasche (7A; 7B), in der das Spannmittel (6) geführt wird auch über die gemeinsame Naht (10) mit dem Verdeckstoff (2, 3; 200, 310) verbunden ist.

10. Softtop (100) für ein Fahrzeug bestehend aus einem Verdeckstoff (200, 310) nach einem der vorherigen Ansprüche, **dadurch gekennzeichnet, dass** das zumindest eine Festelement im wesentlichen parallel zur Fahrzeuglängsachse verläuft.

11. Softtop (1) für ein Fahrzeug bestehend aus einem Verdeckstoff (2, 3) nach einem der Ansprüche 1 bis 9, **dadurch gekennzeichnet, dass** das zumindest eine Festelement (5) im wesentlichen orthogonal zur Fahrzeuglängsachse verläuft.

12. Softtop (1; 100) für ein Fahrzeug nach einem der vorherigen Ansprüche, **dadurch gekennzeichnet, dass** der Verdeckstoff (2, 3; 200, 310) im Bereich der Abkröpfung (4) oder Einbuchtung so ausgebildet und angeordnet ist, dass eine Rinne (40; 400) mit Wasserabfuhrfunktion ausgebildet wird.

13. Softtop (1; 100) nach Anspruch 12, **dadurch gekennzeichnet, dass** die Rinne (40; 400) so angeordnet ist, dass der Anschlussbereich der Rinne (40; 400) zu einer Karosserie ebenfalls eine Wasserabfuhrfunktion aufweist.

## Claims

1. A cloth (2, 3; 200, 310) for a soft top (1; 100) which is designed to be stretchable over at least one solid element (5), wherein said solid element (5) comprises at least one offsetting (4) or indentation, and said cloth (2, 3; 200, 310) overstretching said solid element (5) is deformed by suitable clamping devices (6) such that said cloth (2, 3; 200, 310) follows substantially the contour of said offsetting (4) or indentation in the region of said offsetting (4) or indentation, **characterized in that** the solid element (5) is designed as a bow, a roof ridge, a seal carrier or a kinematic element.

2. The cloth (2, 3; 200, 310) according to claim 1, **characterized in that** said clamping device (6) is designed to be flexible and inherently unstable.

3. The cloth (2, 3; 200, 310) according to claim 1 or 2, **characterized in that** said clamping device (6) is joined with said cloth (2, 3; 200, 310) in a form-locking manner.

4. The cloth (2, 3; 200, 310) according to any of the preceding claims, **characterized in that** said clamping device (6) is guided loosely in a bag (7A; 7B) that is arranged at said cloth (2, 3; 200, 310).

5. The cloth (2, 3; 200, 310) according to any of the preceding claims, **characterized in that** said clamping device (6) substantially rests in the sole of said offsetting (4) or indentation in the stress state.

6. The cloth (2, 3; 200, 310) according to any of the preceding claims, **characterized in that** at least two partial areas of the cloth are joined in the region of said offsetting (4) or indentation.

7. The cloth (2, 3; 200, 310) according to claim 6, **characterized in that** said at least two partial areas form a common seam (10) in the region of said offsetting (4) or indentation.

8. The cloth (2, 3; 200, 310) according to claim 7, **characterized in that** said common seam (10) is designed such that the application of force through said clamping device (6) is performed via said common seam (10).

9. The cloth (2, 3; 200, 310) according to claim 8 or claim 4, **characterized in that** said bag (7A; 7B) in which said clamping device (6) is guided is also joined with said cloth (2, 3; 200, 310) via said common seam (10).

10. A soft top (100) for a vehicle, consisting of a cloth (200, 310) according to any of the preceding claims, **characterized in that** said at least one solid element extends substantially parallel to the longitudinal axis of the vehicle.

11. The soft top (1) for a vehicle, consisting of a cloth (2, 3) according to any of claims 1 to 9, **characterized in that** said at least one solid element (5) extends substantially orthogonally to the longitudinal axis of the vehicle.

12. The soft top (1; 100) for a vehicle according to any of the preceding claims, **characterized in that** said cloth (2, 3; 200, 310) is designed and arranged in the region of said offsetting (4) or indentation such that a groove (40; 400) with a water removing function is formed.

13. The soft top (1; 100) according to claim 12, **characterized in that** said groove (40; 400) is arranged such that said joining region of said groove (40; 400) to a carriage also has a water removing function.

## Revendications

1. Toile de recouvrement (2, 3 ; 200, 310) pour une capote pliante (1 ; 100) qui peut être tendue sur au moins un élément fixe (5), l'élément fixe (5) présentant au moins un coudage (4) ou un rentré et la toile de recouvrement (2, 3 ; 200, 310) tendue au-dessus de l'élément fixe (5) étant déformée par des moyens tendeurs appropriés (6) de telle sorte que la toile de recouvrement (2, 3 ; 200, 310), dans la région du coudage (4) ou du rentré, suive sensiblement le contour du coudage (4) ou du rentré, **caractérisée en ce que** l'élément fixe (5) est réalisé sous forme d'arceau, de pointe de toit, de support d'étanchéité ou d'élément cinématique.

2. Toile de recouvrement (2, 3 ; 200, 310) selon la revendication 1, **caractérisée en ce que** le moyen tendeur (6) est réalisé sous forme flexible et de forme instable.

3. Toile de recouvrement (2, 3 ; 200, 310) selon la revendication 1 ou 2, **caractérisée en ce que** le moyen tendeur (6) est connecté par engagement positif à la toile de recouvrement (2, 3 ; 200, 310).

4. Toile de recouvrement (2, 3 ; 200, 310) selon l'une quelconque des revendications précédentes, **caractérisée en ce que** le moyen tendeur (6) est guidé lâchement dans une cavité (7A ; 7B), qui est réalisée sur la toile de recouvrement (2, 3 ; 200, 310).

5. Toile de recouvrement (2, 3 ; 200, 310) selon l'une quelconque des revendications précédentes, **caractérisée en ce que** le moyen tendeur (6) repose sensiblement dans la semelle du coudage (4) ou du rentré dans l'état tendu.

6. Toile de recouvrement (2, 3 ; 200, 310) selon l'une quelconque des revendications précédentes, **caractérisée en ce que** dans la région du coudage (4) ou du rentré, au moins deux régions partielles de la toile de recouvrement sont assemblées l'une à l'autre.

7. Toile de recouvrement (2, 3 ; 200, 310) selon la revendication 6, **caractérisée en ce que** les au moins deux régions partielles constituent dans la région du coudage (4) ou du rentré un joint commun (10).

8. Toile de recouvrement (2, 3 ; 200, 310) selon la revendication 7, **caractérisée en ce que** le joint commun (10) est réalisé de telle sorte que l'application de force par le moyen tendeur (6) se produise par le biais de celui-ci.

9. Toile de recouvrement (2, 3 ; 200, 310) selon la revendication 8 ou selon la revendication 4, **caractérisée en ce que** la cavité (7A ; 7B) dans laquelle le moyen tendeur (6) est guidé est également raccordée par le biais du joint commun (10) à la toile de recouvrement (2, 3 ; 200, 310).

10. Capote pliante (100) pour un véhicule, constituée d'une toile de recouvrement (200, 310) selon l'une quelconque des revendications précédentes, **caractérisée en ce que** l'au moins un élément fixe s'étend sensiblement parallèlement à l'axe longitudinal du véhicule.

11. Capote pliante (1) pour un véhicule, constituée d'une toile de recouvrement (2, 3) selon l'une quelconque des revendications 1 à 9, **caractérisée en ce que** l'au moins un élément fixe (5) s'étend sensiblement perpendiculairement à l'axe longitudinal du véhicule.

12. Capote pliante (1 ; 100) pour un véhicule selon l'une quelconque des revendications précédentes, **caractérisée en ce que** la toile de recouvrement (2, 3 ; 200, 310) est réalisée et disposée dans la région du coudage (4) ou du rentré de telle sorte qu'il se forme une rigole (40 ; 400) ayant une fonction d'évacuation de l'eau.

13. Capote pliante (1 ; 100) selon la revendication 12, **caractérisée en ce que** la rigole (40 ; 400) est disposée de telle sorte que la région de raccordement de la rigole (40 ; 400) à une carrosserie présente également une fonction d'évacuation de l'eau.
